# FASCICULE DE BREVET EUROPEEN

(11) **EP 2 816 723 B1**
(45) Date de publication et mention de la délivrance du brevet: **20.04.2016**
(21) Numéro de dépôt: 14354011.0
(22) Date de dépôt: 04.06.2014
(51) Int. Cl.: H02N 2/00, F16M 11/04, F16M 11/12, F16M 11/18

(54) **Mécanisme tripode à actionneurs piézoélectriques**
Drehkreuzmechanismus mit piezoelektrischen Stellgliedern
Tripod mechanism with piezoelectric actuators

(30) Priorité: 21.06.2013 FR 1301462
(43) Date de publication de la demande: 24.12.2014
(73) Titulaire: Cedrat Technologies, 38246 Meylan Cedex (FR)
(72) Inventeur: Belly, Christian, 38610 Gières (FR)
(74) Mandataire: Hecké, Gérard

(56) Documents cités:
- WO-A1-01/09965
- WO-A2-2008/132337
- US-A1- 2001 017 665
- US-A1- 2003 106 230
- US-A1- 2004 140 737

## Description

### Domaine technique de l'invention

L'invention concerne un mécanisme de positionnement multidirectionnel d'un plateau mobile actionné par trois actionneurs à moteurs piézoélectriques linéaires prenant appui sur un plateau fixe, de manière à former un tripode ayant trois pôles verticaux parallèles s'étendant perpendiculairement au plateau fixe, ledit mécanisme ayant trois degrés de liberté comprenant :
- une translation (Tz) suivant l'axe d'extension des pôles,
- et deux rotations (Rx, Ry) autour des axes principaux (x, y) du plan de base défini par le plateau fixe.

Ces mécanismes sont généralement utilisés dans les applications de micro motorisation linéaires ou rotatives de précision, par exemple en optique pour des fonctions de focalisation ou en microscopie pour le micro positionnement d'échantillons.

### Etat de la technique

On connaît des manipulateurs de positionnement fin faisant usage de trois actionneurs linéaires intercalés entre un plateau fixe et un plateau mobile servant de support à l'objet à positionner. Un tel dispositif est décrit dans le document US 2004/0140737). Les trois actionneurs forment un prisme avec des pieds disposés en parallèle sur la base fixe, et décalés de 120° entre eux par rapport à la charge au centre. Le déplacement selon l'axe z s'opère en actionnant les trois actionneurs en même temps. Pour les déplacements en rotation autour des axes x et y, on actionne au mois deux actionneurs, sinon trois à la fois. Les actionneurs d'un tel mécanisme connu utilisent généralement des liaisons linéaires annulaires, et/ou des billes pouvant coulisser dans une rainure en V renversé du plateau mobile. Il est alors nécessaire de synchroniser les déplacements des trois actionneurs en même temps, ce qui complique la mise en oeuvre du circuit électronique de commande.

### Objet de l'invention

L'objet de l'invention consiste à perfectionner la cinématique d'un mécanisme tripode de positionnement fin à plusieurs degrés de liberté, pour obtenir une précision optimum, et pour simplifier le circuit électronique de commande.

Le mécanisme de positionnement selon l'invention est caractérisé en ce :
- l'actionneur du pôle central est aligné avec l'axe z pour assurer le mouvement de translation Tz,
- les deux autres actionneurs des pôles latéraux sont décalés angulairement de 90° par rapport au pôle central pour assurer les mouvements de rotation (Rx, Ry),
- les trois actionneurs sont reliés individuellement au plateau mobile par une liaison à rotule,
- chacun des deux actionneurs latéraux est en liaison avec le plateau fixe par l'intermédiaire d'une articulation à pivot, alors que l'actionneur central est solidarisé directement au plateau fixe.

Selon un mode de réalisation préférentiel, les moteurs piézoélectriques des trois actionneurs sont des moteurs inertiels linéaires comprenant chacun :
- un premier sous-ensemble à élément piézoactif formant avec une coque un amplificateur mécanique,
- et un deuxième sous-ensemble d'entraînement à arbre autorisant un mouvement de translation relatif par rapport à une pince de retenue, de manière à constituer un vérin.

Selon une caractéristique de l'invention, chaque liaison à rotule des trois actionneurs, comporte :
- un élément semi-sphérique prenant appui dans un logement tronconique d'un siège fixé à la face inférieure du plateau mobile,
- et un aimant permanent agencé dans le siège pour créer une liaison rotative à frottement et à précharge magnétique.

Il en est de même pour chaque articulation à pivot des deux actionneurs latéraux. Elle est munie :
- d'un élément cylindrique venant en engagement avec un logement en V d'un siège solidaire du plateau fixe,
- et d'un aimant permanent associé au siège, l'ensemble étant agencé pour constituer une liaison pivotante à frottement et à précharge magnétique.

### Description sommaire des dessins

D'autres avantages et caractéristiques ressortiront plus clairement de la description qui va suivre d'un mode de réalisation de l'invention donné à titre d'exemple non limitatif et représenté aux dessins annexés, dans lesquels :
- la figure 1 est une vue en perspective du mécanisme tripode à actionneurs piézoélectriques selon l'invention, le plateau mobile se trouvant dans une position horizontale abaissée, et les supports de capteurs n'étant pas représentés ;
- la figure 2 représente une vue schématique de la cinématique du mécanisme de la figure 1 ;
- la figure 3A montre une vue en perspective d'un actionneur d'un pôle latéral ;
- les figures 3B et 3C sont des vues en élévation d'un actionneur, respectivement en position abaissée et en position relevée de l'arbre du moteur correspondant ;
- les figures 4A-4C sont différentes vues en coupe du mécanisme de la figure 1, avec les supports de capteurs, et plusieurs positions du plateau mobile ;
- les figures 5A et 5B montrent des vues en angle avec inclinaison gauche et droit du plateau mobile ;
- la figure 6 représente une vue de détail de l'une des liaisons à rotule de chaque actionneur ;
- la figure 7 illustre une vue de détail de l'une des articulations à pivot de chaque actionneur latéral.

### Description d'un mode particulier de réalisation

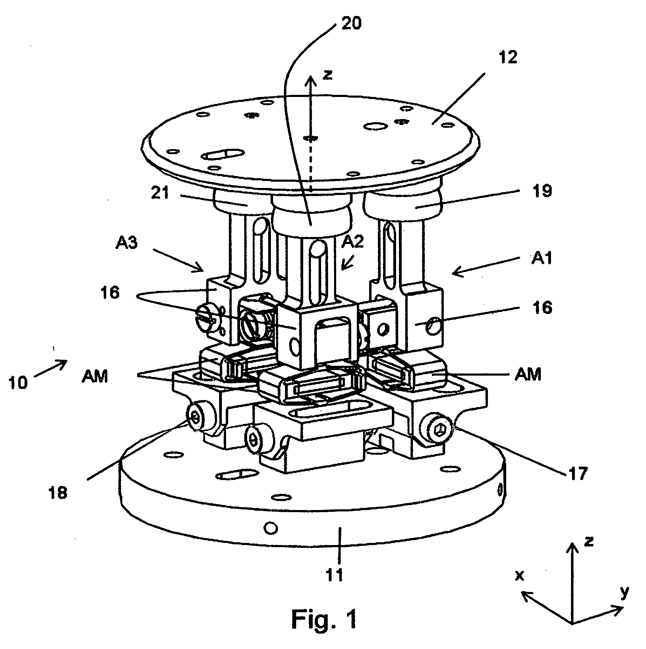

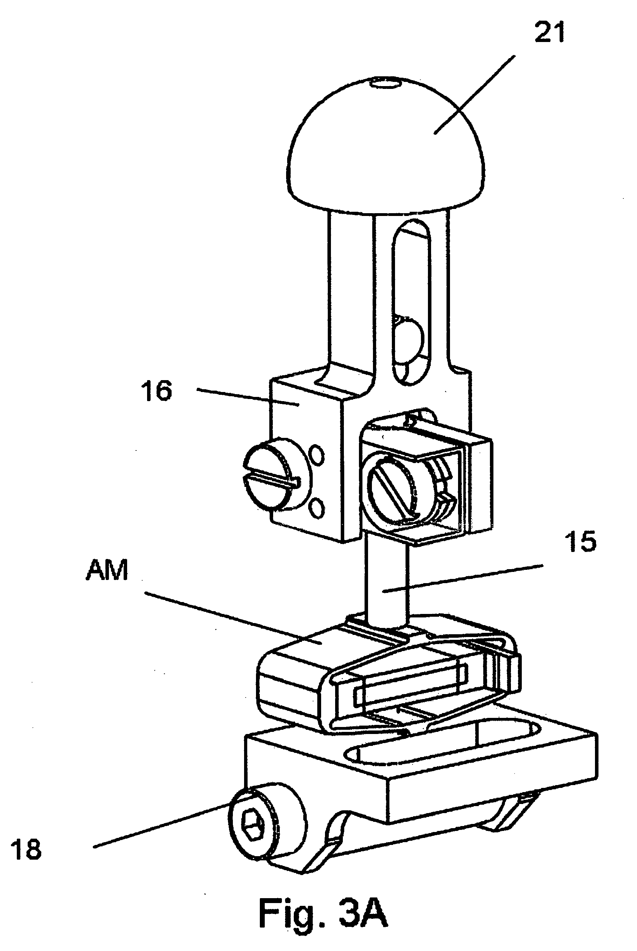

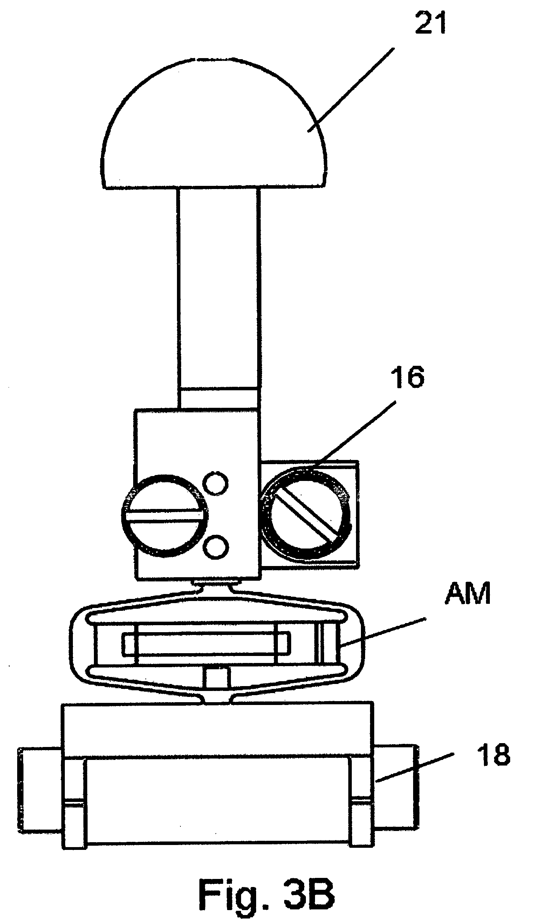

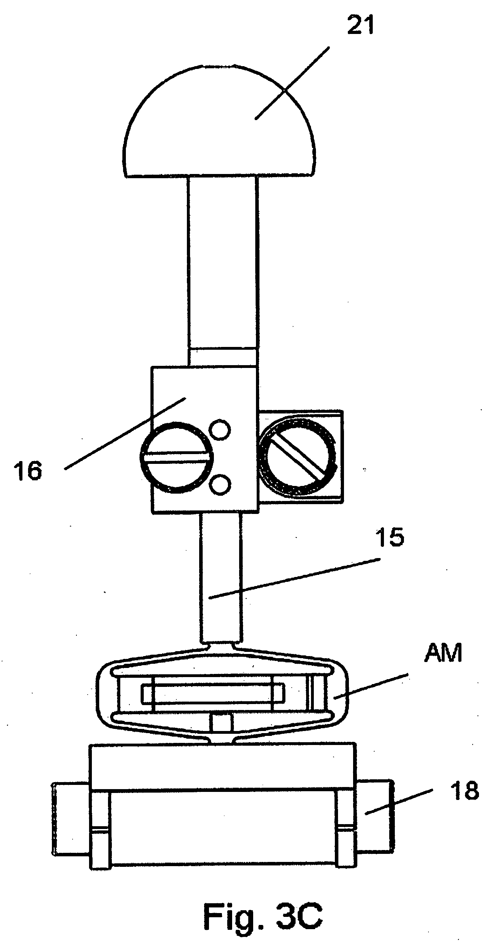

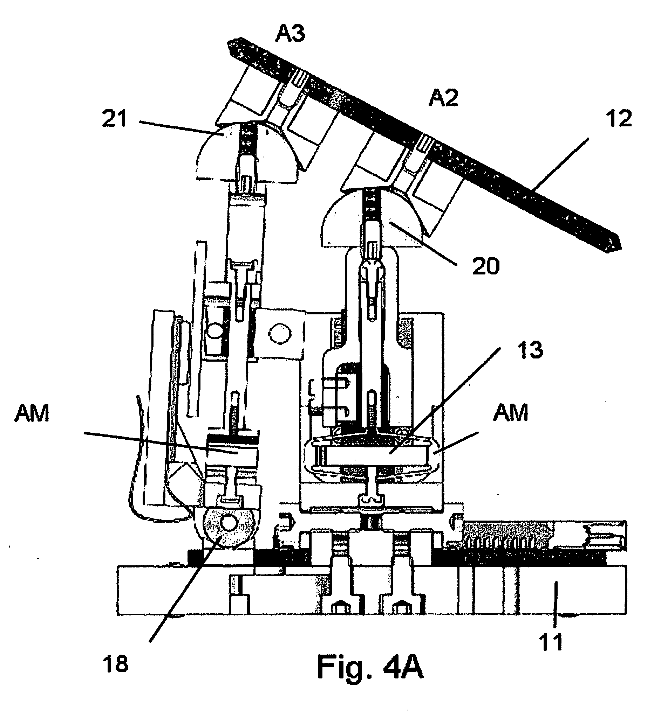

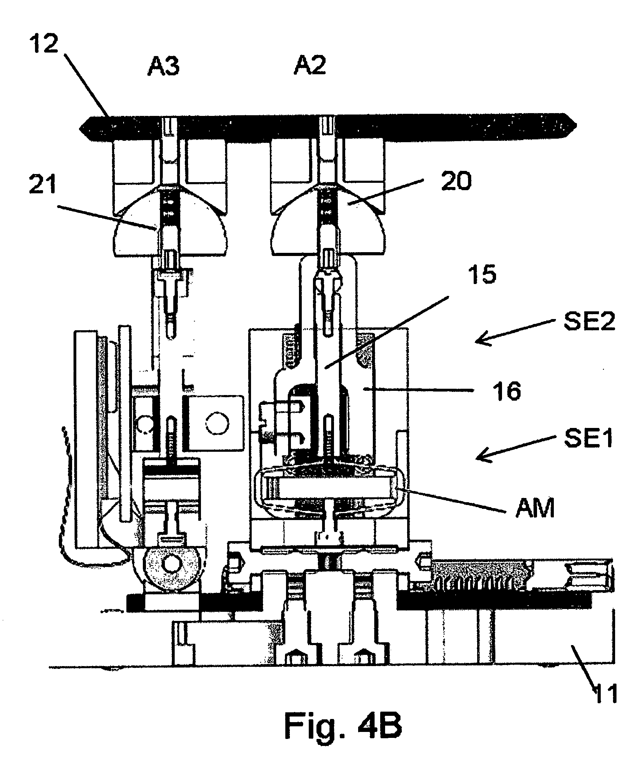

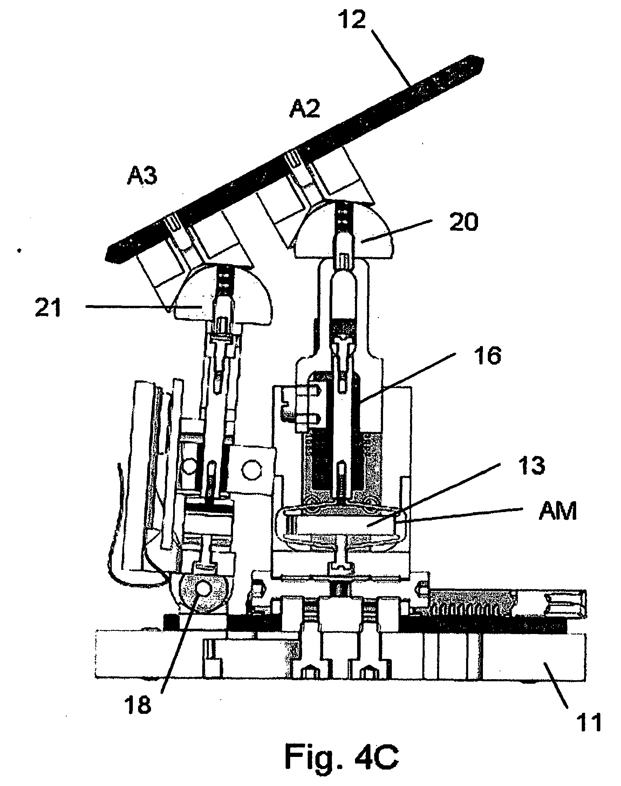

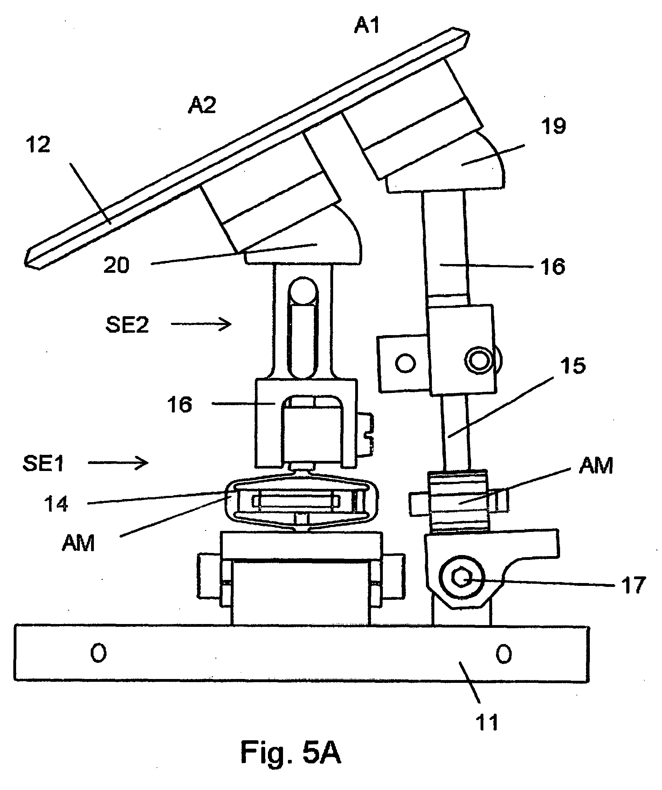

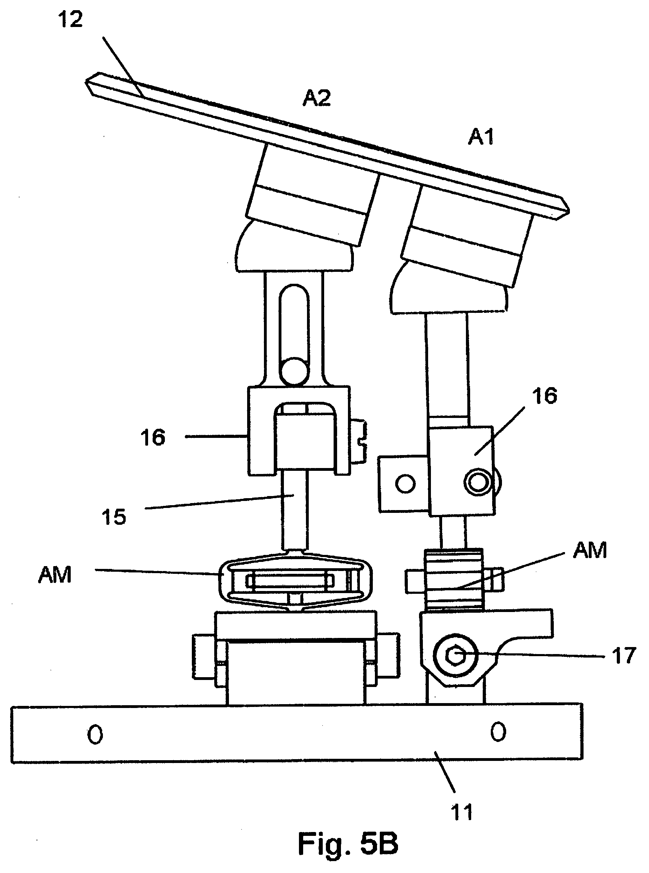

En référence aux figures 1, 2, 3A-3C, 4A-4C et 5A-5C, un mécanisme 10 de positionnement multidirectionnel, comporte un plateau d'appui 11 fixe servant de support inférieur à trois actionneurs A1, A2, A3 de commande destinés à ajuster la position spatiale d'un plateau mobile 12 supérieur. Un instrument de mesure ou de contrôle, notamment optique et/ou électronique peut être disposé sur la face supérieure du plateau mobile 12, de manière à être orienté selon une position prédéterminée.

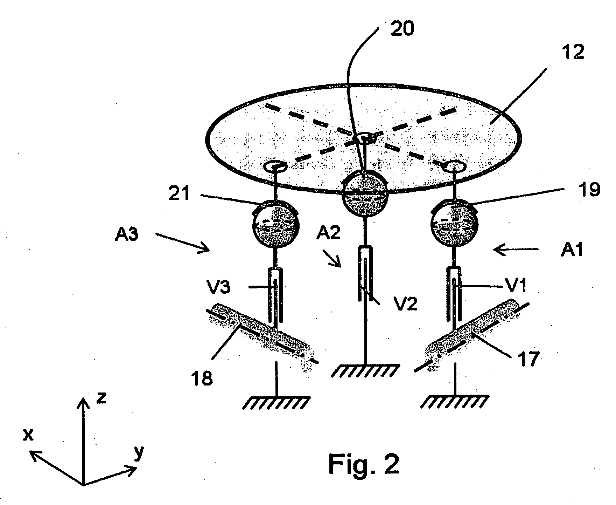

Les trois actionneurs A1, A2, A3 s'étendent parallèlement selon des pôles verticaux entre les deux plateaux 11, 12, de manière à constituer un tripode. Le mécanisme 10 est doté de trois degrés de liberté, à savoir une translation suivant l'axe normal au plateau fixe 11, et deux rotations autour des axes principaux du plan de base. Ces degrés de libertés sont appelés TZ pour la translation et RX et RY pour les rotations. Les organes moteurs des actionneurs A1, A2, A3 sont représentés schématiquement sur la figure 2 par trois vérins V1, V2, V3, chaque vérin étant actionné par un moteur piézoélectrique linéaire.

A titre d'exemples, ces moteurs sont des moteurs inertiels linéaires, décrits en détails dans le brevet WO 2008132337. Un tel moteur comporte schématiquement :
- un premier sous-ensemble SE1 inertiel incluant au moins un élément piézoactif 13, et au moins un point d'inertie, et capable de produire en un point d'actionnement des forces d'impact et des déplacements dans une direction d'actionnement,
- un deuxième sous-ensemble SE2 d'entraînement incluant au moins un élément entraîneur et un élément entraîné, l'un des deux éléments étant fixé au premier sous-ensemble SE1 inertiel par le point d'actionnement,
- et un circuit électronique (non représenté) permettant d'alimenter chaque élément piézoactif 13 du premier sous-ensemble SE1 inertiel suivant des cycles d'excitation prédéterminés.

Le premier sous-ensemble SE1 inertiel comporte un amplificateur mécanique AM amplifiant les déplacements de l'élément piézoactif 13 en forme de barrette, le point d'actionnement étant situé sur la coque 14 de l'amplificateur mécanique, sans venir en engagement direct avec l'élément piézoactif 13. L'élément entraîneur et l'élément entraîné sont conformés selon au moins une pince et un élément pincé pour autoriser un mouvement de glissement adhérence. La coopération des deux sous-ensembles SE1 et SE2 de chaque moteur constitue le vérin V1, V2, V3 correspondant de la figure 2.

Les sous-ensembles SE1 et SE2 de chaque vérin comportent un amplificateur mécanique AM, une masse inertielle, un arbre 15 et une pince 16. L'amplificateur mécanique AM piézoélectrique linéaire est utilisé pour mettre lentement en mouvement la masse inertielle, sans faire glisser l'arbre dans la pince 16. Il revient ensuite à sa position initiale de manière brutale ce qui contraint l'arbre 15 à glisser dans la pince 16 correspondante du fait de l'inertie de la masse. Un pas vient d'être fait et on répète cette séquence afin d'atteindre la position désirée. Entre chaque séquence de pas, dés l'arrêt de la commande électrique, le moteur retrouve un état bloqué et cela, même sans alimentation externe.

Sur la figure 2, chacun des degrés de liberté du mécanisme est principalement commandé par un des trois vérins V1, V2, V3 constituant le mécanisme 10. Chacun des pôles est placé suivant la configuration suivante, mettant en oeuvre un pôle central avec le vérin V2, et deux pôles latéraux aves les vérins V1 et V3 disposés angulairement à 90°. Le vérin V2 central ne doit pas changer de position suivant les axes X et Y, et est placé de manière rigide au plateau fixe 11. Les deux autres vérins V1 et V3 permettent une liberté suivant les rotations Rx et Ry. Chacun des deux vérins V1 et V3 prend appui à cet effet sur une articulation à pivot 17, 18 . En plus, le plateau mobile 12 est lié aux vérins V1, V2, V3 par trois liaisons à rotules 19, 20, 21 pour définir la position du plan mobile.

La propriété de blocage à l'arrêt du moteur piézoélectrique est un avantage dans le cadre des mécanismes à plusieurs degrés de liberté lorsque les axes sont indépendants. En effet, il est alors possible, de commander le mécanisme à l'aide d'un seul circuit électronique de commande ou driver. Les degrés de liberté du mécanisme 10 sont rendus aussi indépendants que possible. Ainsi, sur la figure 2, la disposition des vérins V1, V2, V3 est réalisée de manière à ce que :
Le vérin V2 central gère la translation TZ, avec les vérins V1 et V3 ;
Le vérin V1 commande RX c'est à dire la rotation autour de l'axe x , indépendamment des autres
Le vérin V3 commande RY c'est à dire la rotation autour de l'axe y , indépendamment des autres.

Le mécanisme 10 tripode selon l'invention se distingue ainsi des mécanismes existants en ce que :
- les actionneurs A1, A2, A3 s'étendent verticalement selon des axes parallèles à l'axe z, dont un axe central pour l'actionneur A2, et deux axes décalés angulairement de 90°pour les actionneurs latéraux A1 et A3 ;
- deux articulations à pivot 17, 18 sont agencées entre le plateau fixe 11 et les amplificateurs mécaniques AM des actionneurs A1 et A3 latéraux ;
- des liaisons à rotules 19, 20, 21 relient l'arbre 15 des amplificateurs mécaniques AM des trois actionneurs A1, A2, A3 au plateau mobile 12.

Le cumul des fonctions de blocage à l'arrêt et d'indépendance des degrés de liberté permet de concevoir un circuit électronique de commande simplifié. Un seul driver de moteur peut en effet être utilisé pour générer les déplacements des trois moteurs piézoélectriques, les uns après les autres, notamment à l'aide d'un répartiteur.

La cinématique du système à plusieurs degrés de liberté et à grande course nécessite des systèmes d'articulation autorisant les rotations. Les liaisons flexibles utilisées pour les mécanismes connus à plusieurs degrés de liberté à débattement limité ne sont pas adaptées pour des courses où les rotations sont de quelques degrés. Ainsi, des composants de rotations sphériques ou cylindriques sont requis. Les composants du commerce proposent généralement des solutions à frottement et jeu. Ce jeu, même faible, est néfaste à la précision du système.

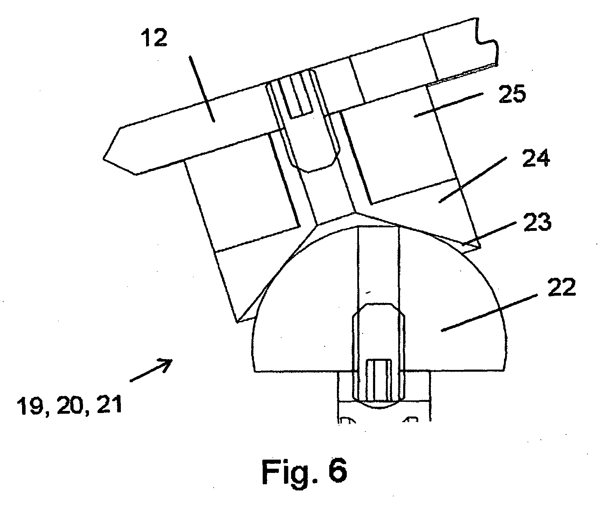

Sur la figure 6, chaque liaison à rotule 19, 20, 21 est du type à frottement et précharge magnétique. Elle comporte un élément semi-sphérique 22 solidaire de l'arbre 15 du moteur correspondant et ayant un rayon prédéterminé. L'élément semi-sphérique 22 prend appui dans un logement 23 tronconique d'un siège 24 de frottement fixé à la face inférieure du plateau mobile 12. Le siège 24 est pourvu d'un aimant permanent 25 annulaire, destiné à engendrer des forces magnétiques axiales d'attraction. L'effet de précharge magnétique qui en résulte évite les jeux dans la chaîne cinématique.

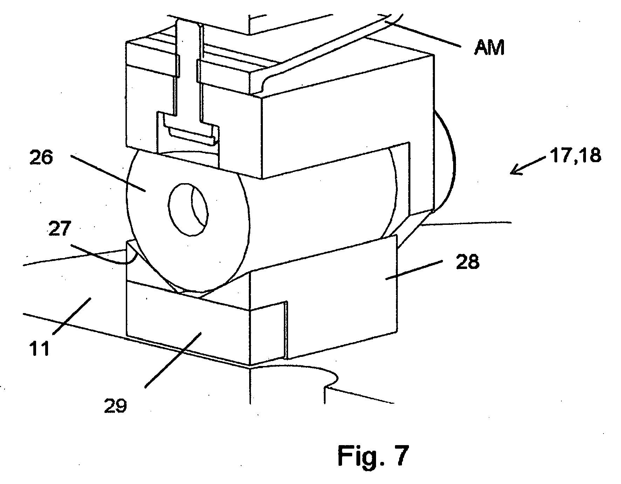

La figure 7 montre le même principe de précharge magnétique pour chacune des articulations à pivot 17, 18. Elle est munie chacune d'un élément cylindrique 26 logé entre l'amplificateur mécanique AM et le plateau fixe 11, en prenant appui dans un logement 27 en V d'un siège de frottement 28. Ce dernier comporte également un aimant permanent apte à centrer l'élément cylindrique 26 dans le logement 27 en V lors de la rotation autour des axes x et y.

## Revendications

1. Mécanisme de positionnement multidirectionnel d'un plateau mobile (12) actionné par trois actionneurs (A1, A2, A3) à moteurs, piézoélectriques linéaires prenant appui sur un plateau fixe (11) de manière à former un tripode ayant trois pôles verticaux parallèles s'étendant perpendiculairement au plateau fixe (11), ledit mécanisme ayant trois degrés de liberté comprenant :
- une translation (Tz) suivant l'axe d'extension des pôles,
- et deux rotations (Rx, Ry) autour des axes principaux (x, y) du plan de base défini par le plateau fixe (11),
- l'actionneur (A2) du pôle central est aligné avec l'axe z pour assurer le mouvement de translation Tz,
- les trois actionneurs (A1, A2, A3) sont reliés individuellement au plateau mobile (12) par une liaison à rotule (19, 20, 21), l'actionneur (A2) central est solidarisé directement au plateau fixe (11)
**caractérisé en ce que**
- les deux autres actionneurs (A1, A3) des pôles latéraux sont décalés angulairement de 90° par rapport au pôle central pour assurer les mouvements de rotation (Rx, Ry),
- chacun des deux actionneurs (A1, A3) latéraux est en liaison avec le plateau fixe (11) par l'intermédiaire d'une articulation à pivot (17, 18).

2. Mécanisme de positionnement selon la revendication 1, **caractérisé en ce que** les moteurs piézoélectriques des trois actionneurs (A1, A2, A3) sont des moteurs inertiels linéaires comprenant chacun :
- un premier sous-ensemble (SE1) à élément piézoactif (13) formant avec une coque (14) un amplificateur mécanique (AM),
- et un deuxième sous-ensemble (SE2) d'entraînement à arbre (15) autorisant un mouvement de translation relatif par rapport à une pince (16) de retenue de manière à constituer un vérin (V1, V2, V3).

3. Mécanisme de positionnement selon la revendication 1 ou 2, **caractérisé en ce que** chaque liaison à rotule (19, 20, 21) des trois actionneurs (A1, A2, A3) comporte :
- un élément semi-sphérique (22) prenant appui dans un logement (23) tronconique d'un siège (24) fixé à la face inférieure du plateau mobile (12),
- et un aimant permanent (25) agencé dans le siège (24), pour créer une liaison rotative à frottement et à précharge magnétique.

4. Mécanisme de positionnement selon la revendication 1 ou 2, **caractérisé en ce que** chaque articulation à pivot (17, 18) des deux actionneurs latéraux (A1, A3) est munie :
- d'un élément cylindrique (26) venant en engagement avec un logement en V d'un siège (28) solidaire du plateau fixe (11),
- et d'un aimant permanent (29) associé au siège (28), l'ensemble étant agencé pour constituer une liaison pivotante à frottement et à précharge magnétique.

## Patentansprüche

1. Mechanismus zur multidirektionalen Positionierung einer beweglichen Scheibe (12), die von drei Aktuatoren (A1, A2, A3) mit piezoelektrischen Linearmotoren gesteuert wird, die auf einer festen Scheibe (11) aufliegen und so einen Dreibeinaufbau mit drei parallelen, vertikalen Polen bilden, die sich lotrecht zur festen Scheibe (11) erstrecken, welcher Mechanismus drei Freiheitsgrade hat, die umfassen:
- eine Translation (Tz) gemäß der Ausdehnungsachse der Pole,
- und zwei Drehungen (Rx, Ry) um die Hauptachsen (x, y) der Basisebene, die von der festen Scheibe (11) definiert ist, wobei der Aktuator (A2) des mittleren Pols auf die Achse z gefluchtet ist, um die Translationsbewegung Tz sicherzustellen, die drei Aktuatoren (A1, A2, A3) einzeln über eine Kugelverbindung (19, 20, 21) mit der festen Scheibe (12) verbunden sind und der mittlere Aktuator (A2) direkt fest mit der festen Scheibe (11) verbunden ist, **dadurch gekennzeichnet, dass**
- die beiden anderen Aktuatoren (A1, A3) der seitlichen Pole winklig um 90° bezüglich dem mittleren Pol versetzt sind, um die Drehbewegungen (Rx, Ry) sicherzustellen,
- jeder der beiden seitlichen Aktuatoren (A1, A3) mittels eines Drehgelenks (17, 18) mit der festen Scheibe (11) verbunden ist.

2. Positionierungsmechanismus nach Anspruch 1, **dadurch gekennzeichnet, dass** die piezoelektrischen Motoren der drei Aktuatoren (A1, A2, A3) lineare Trägheitsmotoren sind, die jeweils umfassen:
- einen ersten Teil (SE1) mit piezoaktivem Element (13), der mit einer Schale (14) einen mechanischen Verstärker (AM) bildet,
- und einen zweiten Teil (SE2) mit Wellenantrieb (15), der eine relative Translationsbewegung bezüglich einer Rückhalteklaue (16) erlaubt und so einen Zylinder (V1, V2, V3) bildet.

3. Positionierungsmechanismus nach Anspruch 1 oder 2, **dadurch gekennzeichnet, dass** jede Kugelverbindung (19, 20, 21) der drei Aktuatoren (A1, A2, A3) umfasst:
- ein halbrundes Element (22), das in einer kegelstumpfförmigen Aufnahme (23) eines Sitzes (24) aufliegt, der an der Unterseite der beweglichen Platte (12) angebracht ist,
- und einen Dauermagneten (25), der in dem Sitz (24) angeordnet ist, um eine Drehverbindung mit Reibung und magnetischer Vorspannung herzustellen.

4. Positionierungsmechanismus nach Anspruch 1 oder 2, **dadurch gekennzeichnet, dass** jedes Drehgelenk (17, 18) der beiden seitlichen Aktuatoren (A1, A3) ausgestattet ist mit:
- einem zylindrischen Element (26), das in Eingriff kommt mit einer V-förmigen Aufnahme eines mit der festen Scheibe (11) fest verbundenen Sitzes (28),
- und einem Dauermagneten (29), der mit dem Sitz (28) verbunden ist, wobei das Ganze so vorgesehen ist, dass es eine Schwenkverbindung mit Reibung und magnetischer Vorspannung bildet.

## Claims

1. A multidirectional positioning mechanism of a moving plate (12) actuated by three linear piezoelectric motor-driven actuators (A1, A2, A3) supported by a fixed plate (11) so as to form a tripod having three parallel vertical poles extending perpendicularly to the fixed plate (11), said mechanism having three degrees of freedom comprising:
- a translation (Tz) along the axis of extension of the poles,
- and two rotations (Rx, Ry) around the main axes (x, y) of the base plane defined by the fixed plate (11), the actuator (A2) of the central pole being aligned with the z-axis to perform the translation movement Tz, the three actuators (A1, A2, A3) being individually connected to the moving plate (12) by a toggle joint (19, 20, 21), the central actuator (A2) being secured directly to the fixed plate (11),
**characterized in that**
- the other two actuators (A1, A3) of the lateral poles are angularly offset by 90° with respect to the central pole to perform the rotation movements (Rx, Ry),
- each of the two lateral actuators (A1, A3) is connected with the fixed plate (11) by means of a swivel joint (17, 18).

2. The positioning mechanism according to claim 1, **characterized in that** the piezoelectric motors of the three actuators (A1, A2, A3) are linear inertia motors each comprising:
- a first sub-assembly (SE1) with a piezo-active element (13) forming a mechanical amplifier (AM) with a shell (14),
- and a second sub-assembly (SE2) driven by a shaft (15) enabling a relative translation movement with respect to a slide retainer (16) so as to form a jack (V1, V2, V3).

3. The positioning mechanism according to claim 1 or 2, **characterized in that** each toggle joint (19, 20, 21) of the three actuators (A1, A2, A3) comprises:
- a semi-spherical element (22) supported in a frustum-shaped housing (23) of a seat (24) fixed to the bottom surface of the moving plate (12),
- and a permanent magnet (25) arranged in the seat (24) to create a rotary link with friction and magnetic precharge.

4. The positioning mechanism according to claim 1 or 2, **characterized in that** each swivel joint (17, 18) of the two lateral actuators (A1, A3) is provided:
- with a cylindrical element (26) coming into engagement with a 11-shaped housing of a seat (28) secured to the fixed plate (11),
- and with a permanent magnet (29) associated with the seat (28), the assembly being arranged to form a pivoting link with friction and magnetic precharge.
